# FASCICULE DE BREVET EUROPEEN

(11) **EP 2 674 278 B1**
(45) Date de publication et mention de la délivrance du brevet: **20.04.2016**
(21) Numéro de dépôt: 13305769.5
(22) Date de dépôt: 07.06.2013
(51) Int. Cl.: B29C 53/04, B29C 70/46, B29L 31/00, B29L 31/30

(54) **Procédé de réalisation d'un profile courbe en matériau composite à partir d'une préforme rectiligne de nappes de fibres**
Herstellungsverfahren eines gebogenen Profils aus Verbundmaterial auf der Basis einer geraden Vorform aus Fasermatten
Method for producing a curved profile made of composite material from a rectilinear preform of fibre layers

(30) Priorité: 12.06.2012 FR 1255492
(43) Date de publication de la demande: 18.12.2013
(73) Titulaire: Airbus Opérations SAS, 31060 Toulouse (FR)
(72) Inventeur: De Mattia, Denis, 44115 BASSE GOULAINE (FR)
(74) Mandataire: Fantin, Laurent

(56) Documents cités:
- EP-A1- 1 932 652
- FR-A1- 2 928 295
- JP-A- 58 076 217
- US-A1- 2006 108 057
- US-A1- 2010 102 482

## Description

La présente invention se rapporte à un procédé de réalisation d'un profilé courbe en matériau composite à partir d'une préforme rectiligne de nappes de fibres. L'invention concerne plus particulièrement un procédé de réalisation d'un cadre d'un fuselage d'un aéronef.

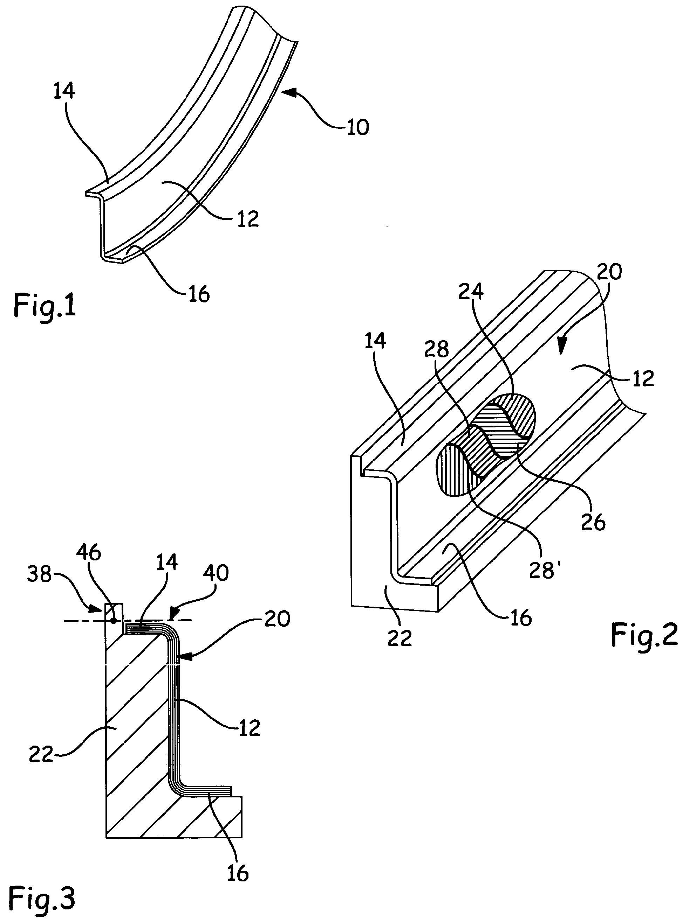

Selon un mode de réalisation illustré sur la figure 1, un cadre de fuselage 10 se présente sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Un procédé de réalisation d'un tel cadre en matériau composite est décrit dans le document FR-2.928.295.

Selon ce document, on réalise dans un premier temps une bande sensiblement rectangulaire à partir d'un empilage de trois nappes de fibres pré-imprégnées, chaque nappe ayant des fibres orientées selon une direction, la bande comportant des nappes avec des orientations de fibres différentes, une nappe avec des fibres à 30°, une nappe avec des fibres à 90° et une autre nappe avec des fibres à 150°.

Dans un second temps, la bande de nappes de fibres est disposée sur un mandrin en matériau déformable puis comprimée sur ce mandrin de manière à épouser sa forme.

Le mandrin déformable est susceptible de se déformer entre une position rectiligne et une position courbe mais a une section transversale incompressible ou quasi incompressible.

En suivant, la bande déformée disposée sur le mandrin en matériau déformable est mise en contact contre un outillage chauffé présentant en périphérie des sections radiales avec un profil complémentaire aux sections transversales du mandrin. Ainsi lors du cintrage, la bande est comprimée et subit une augmentation de température.

Suite à la mise en place de cette première bande, on découpe une deuxième bande de trois nappes de fibres pré-imprégnées pour la disposer sur un autre mandrin déformable puis la comprimer sur ce dernier.

En suivant, cette deuxième bande déformée sur son mandrin en matériau déformable est mise en contact contre la première bande toujours en place sur l'outillage puis comprimée contre la première bande.

Pour obtenir un cadre, il est nécessaire de rapporter comme précédemment plusieurs bandes les unes sur les autres, avant de polymériser l'ensemble ainsi formé.

En complément, des nappes avec des fibres orientées à 0° peuvent être rajoutées manuellement entre certaines bandes.

Ce mode opératoire n'est pas pleinement satisfaisant pour les raisons suivantes : En premier lieu, ce mode opératoire conduit à une productivité faible du fait qu'une multitude de phases de cintrage doivent être réalisées successivement. En second lieu, le positionnement relatif entre les bandes s'avère difficile à réaliser car les bandes sont constituées de fibres pré-imprégnées et peuvent difficilement glisser l'une par rapport à l'autre pour corriger leur position relative. Aussi, il est difficile de garantir que lors du cintrage les deux ailes intérieures des deux bandes, les deux âmes des deux bandes et les deux ailes extérieures des deux bandes soient parfaitement en contact les unes avec les autres sur toute la longueur du cadre. Compte tenu de ces difficultés de mise en place, les opérateurs doivent intervenir à de nombreuses reprises pour tenter de corriger manuellement les défauts constatés.

Selon une autre problématique, au fur et à mesure de l'empilement des bandes, les rayons externes augmentent de valeur alors que les rayons internes diminuent si bien que l'écart de valeur entre la bande déjà en place sur l'outillage de cintrage et la bande rapportée conduit à un défaut appelé pontage, les deux bandes n'étant pas intimement plaquées l'une contre l'autre en fond de rayon de courbure.

Selon une autre problématique, il est impossible de cintrer les bandes après leurs compactages sans provoquer un glissement entre les nappes de fibres pré-imprégnées et de la sorte des ondulations ou des plissements de fibres.

Selon une autre problématique, les nappes de la première bande restent en contact avec l'outillage chauffé à une température de l'ordre de 50°C bien plus longtemps que les nappes de la dernière bande rapportée.

Enfin, selon une autre problématique, les fibres orientées à 0° doivent être déposées manuellement sur les formes cintrées afin de réduire le risque d'ondulation. Cette dépose manuelle tend à augmenter le temps et le coût de production.

Le document EP-1.932.652 divulgue un procédé et un outillage associé pour courber une pièce en matériau composite. Dans ce cas, une préforme rectiligne et plane est disposée entre deux moules pour obtenir un profilé rectiligne avec une section en L. En suivant, ce profilé avec une section en L est courbé autour d'un axe de rotation. Dans ce cas, le profilé avec une section en L comprend une première aile qui a une surface parallèle à l'axe de rotation et qui est disposée entre l'axe de rotation et un insert prévu au niveau d'un des moules. Par conséquent, si des fibres orientées à 0° sont disposées au niveau de cette aile elles ondulent nécessairement lors du cintrage ce qui engendre des défauts dans la pièce obtenue.

Aussi, la présente invention vise à remédier aux inconvénients de l'art antérieur en proposant un procédé de réalisation d'un profilé courbe en matériau composite à partir d'une préforme rectiligne de nappes de fibres permettant de réduire les risques d'ondulation des fibres orientées à 0°, notamment au niveau de l'aile intérieure.

A cet effet, l'invention a pour objet un procédé de réalisation d'un profilé courbe à partir d'une préforme rectiligne de nappes de fibres pré-imprégnées, ledit procédé consistant à empiler des nappes sur un mandrin déformable et à enrouler ledit mandrin déformable et les nappes empilées sur un outillage de cintrage selon un axe de rotation, ledit profilé comprenant un empilage de N nappes, au moins une première partie du profilé étant disposée dans un plan perpendiculaire à l'axe de rotation et au moins une deuxième partie parallèle à l'axe comprenant au moins une nappe de fibres orientées à 0° selon la longueur de la préforme, caractérisé en ce qu'il consiste à empiler les N nappes de fibres sur le mandrin déformable, ledit mandrin déformable comprenant une fibre neutre disposée au niveau d'une portion du mandrin déformable plus proche de l'axe de rotation que la dernière nappe de fibres orientées à 0° empilée au niveau de la deuxième partie parallèle à l'axe de rotation à cintrer en une seule phase les N nappes intercalées entre le mandrin déformable et l'outillage de cintrage et à polymériser lesdites N nappes cintrées.

D'autres caractéristiques et avantages ressortiront de la description qui va suivre de l'invention, description donnée à titre d'exemple uniquement, en regard des dessins annexés sur lesquels :
- La figure 1 est une vue en perspective d'une portion d'un cadre d'un fuselage d'un aéronef,
- La figure 2 est une vue en perspective d'un empilage de nappes sur un mandrin déformable rectiligne selon l'invention avec un arrachement permettant d'illustrer l'orientation des fibres des nappes empilées,
- La figure 3 est une coupe transversale d'un mandrin selon une première variante de l'invention avec un empilage de nappes de fibres,
- La figure 4 est une représentation schématique d'un dispositif de cintrage utilisé pour courber l'empilage de nappes et le mandrin de la figure 2,
- La figure 5 est une illustration de l'orientation de certaines fibres avant le cintrage,
- La figure 6 est une illustration de l'orientation des mêmes fibres que la figure 5 après l'opération de cintrage,
- La figure 7 est une vue en perspective d'un mandrin selon une autre variante de l'invention,
- La figure 8 est une coupe d'un mandrin selon une autre variante de l'invention,
- La figure 9 est une vue en perspective du mandrin de la figure 8, et
- La figure 10 est une vue de dessus du mandrin de la figure 8.

Sur la figure 1, on a représenté un cadre de fuselage 10 sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Pour donner un ordre de grandeur, l'âme a une hauteur de 80 mm, une épaisseur de l'ordre de 4 à 6 mm. Les ailes ont une largeur de l'ordre de 30 mm.

L'invention n'est pas limitée à cette forme de section et à cette application. Ainsi, l'invention peut permettre d'obtenir différents profilés courbes avec une section en J, en Z, en L, en Oméga ou autre.

Selon l'invention, le profilé 10 est courbé selon un axe de rotation X et un rayon de courbure R. Ainsi, le profilé courbe 10 comprend au moins une première partie, plus particulièrement l'âme 12, dans un plan perpendiculaire à l'axe de rotation X et au moins une deuxième partie, plus particulièrement l'aile 14, parallèle à l'axe X. Les différentes parties du profilé sont reliées entre elles par des portions courbes. Ainsi, une première surface d'une première partie est continue avec une première surface de chaque autre partie. Ces premières surfaces forment une surface dite par la suite surface extérieure. De la même manière, une seconde surface de la première partie est continue avec une seconde surface de chaque autre partie. Ces secondes surfaces forment une surface dite par la suite surface intérieure dont une portion est orientée vers l'axe de rotation X.

Selon l'invention, le profilé courbe 10 comprend un empilage de N nappes, N étant un entier supérieur à dix nappes. Pour donner un ordre de grandeur, le profilé comprend une cinquantaine de nappes.

Les nappes comprennent des fibres pré-imprégnées orientées pour chaque nappe selon une direction.

Ce profilé courbe est obtenu à partir d'une préforme rectiligne 20 ayant des sections transversales identiques à celles du profilé courbe 10 à obtenir.

On entend par direction longitudinale la plus grande dimension de la préforme rectiligne. Un plan transversal est un plan perpendiculaire à la direction longitudinale.

La préforme rectiligne 20 est obtenue par l'empilage des N nappes nécessaires pour former le profilé courbe sur un mandrin déformable 22, l'aile intérieure 14 comprenant au moins une nappe de fibres orientées selon la longueur de la préforme (selon la direction longitudinale).

Par déformable, on entend que le mandrin peut se déformer entre une position rectiligne et une position courbe mais a une section transversale incompressible ou quasi incompressible.

Le mandrin déformable 22 comprend une section complémentaire à celle de la préforme rectiligne.

Les N nappes du profilé courbe sont empilées les unes sur les autres, la première nappe déposée sur le mandrin formant la surface extérieure du profilé et la dernière nappe déposée formant la surface intérieure du profilé.

Comme illustré sur la figure 2, certaines nappes 24 peuvent avoir des fibres orientées à A° par rapport à la direction longitudinale et d'autres nappes 26 peuvent avoir des fibres orientées à -A° par rapport à la direction longitudinale, A pouvant varier de 10 à 90°.

Les valeurs A sont déterminées en fonction des caractéristiques mécaniques recherchées. Ces valeurs A sont déterminées par le bureau d'étude et doivent respecter un intervalle de tolérance de +/-3°. Ainsi, lorsque la valeur A nominale de l'orientation est de 30°, les fibres doivent former un angle avec la direction longitudinale compris entre 27° et 33°.

A titre d'exemple, certaines nappes peuvent avoir des fibres orientées à 30° et d'autres nappes des fibres orientées à -30°. Certaines nappes peuvent avoir des fibres orientées à 60° et d'autres nappes des fibres orientées à -60°. Certaines nappes 28, 28' peuvent avoir des fibres orientées respectivement à 0°, 90°.

De préférence, pour chaque valeur de A, le profilé courbe comprend autant de nappes avec des fibres orientées à A° que de nappes avec des fibres orientées à -A°. Lorsque le profilé courbe 10 comprend un empilage de 10 à 20 nappes, il peut comprendre M' nappes avec des fibres orientées à A° et M' +/-1 nappes avec des fibres orientées à -A°. Au-delà de 20 nappes, le profilé peut comprendre M nappes avec des fibres orientées à A° et M +/-5% nappes avec des fibres orientées à -A°.

Avantageusement, une nappe avec des fibres orientées à A° est adjacente à une nappe avec des fibres orientées à -A°.

Selon un mode de réalisation, la préforme comprend des couches alternées orientées à + et - 30°, des renforts locaux orientés à 90° entre ces couches à + et - 30° qui s'étendent sur toute la section du profilé et des renforts à 0° exclusivement localisés dans l'aile intérieure 14. Pour donner un ordre de grandeur, l'épaisseur de l'aile intérieure 14 peut atteindre 10 mm.

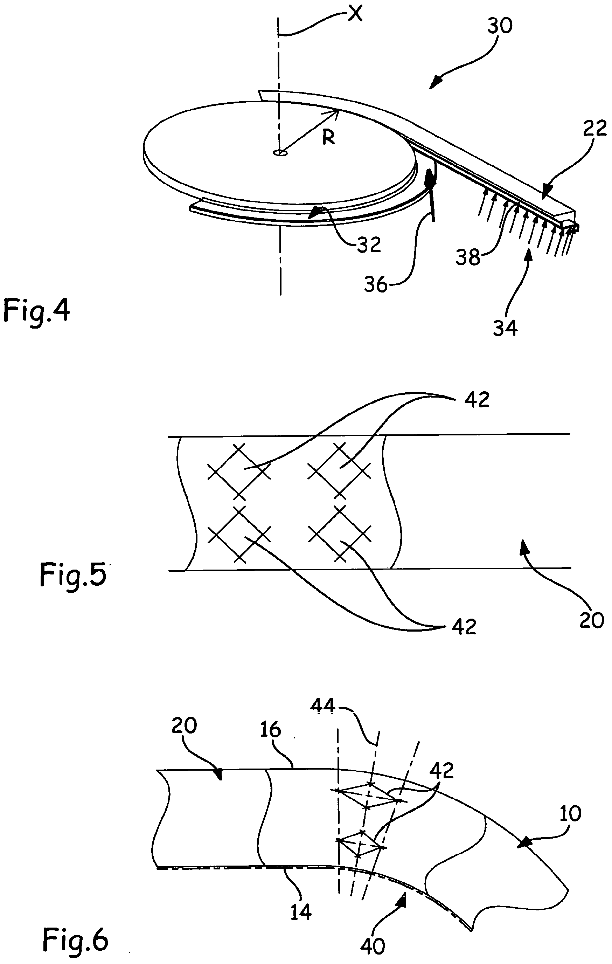

Lorsque toutes les nappes du profilé courbe 10 sont rapportées sur le mandrin déformable 22, on opère une phase de cintrage en utilisant un dispositif de cintrage 30. Lors de la phase de cintrage, le mandrin et toutes les nappes sont enroulés sur un outillage de cintrage 32 du dispositif de cintrage 30 selon un axe de rotation X, comme illustré sur la figure 4, l'outillage de cintrage 32 présentant des sections complémentaires aux sections de la surface intérieure du profilé courbe.

Avantageusement, la zone de déformation de la préforme (zone de la préforme au niveau de laquelle elle vient en contact avec l'outillage de cintrage 32) est portée à une température de 70°C environ.

Selon un mode de réalisation, le dispositif de cintrage comprend des moyens de préchauffage 34 pour chauffer la préforme avant qu'elle ne vienne en contact avec l'outillage de cintrage 32 et des moyens de chauffage 36 permettant de chauffer la zone de déformation.

Selon l'invention, le mandrin 22 comprend une extension 38 dont une portion est plus proche de l'axe de rotation X que la dernière nappe de fibres orientées à 0° empilée lorsque la préforme est disposée sur le mandrin et une fibre neutre 40 disposée au niveau de cette portion afin que ladite fibre neutre soit disposée entre la dernière nappe de fibres orientées à 0° empilée lorsque la préforme est disposée sur le mandrin et l'axe de rotation X.

Par fibre neutre, on entend la ligne fictive du mandrin au niveau de laquelle le mandrin ne s'étire pas et ne se comprime pas.

Avantageusement, on prévoit un nombre identique ou quasi identique de nappes avec des fibres orientées à A° et de nappes avec des fibres orientées à -A°. De plus, toutes les fibres orientées à 0° sont soumises à un effort de traction ce qui limite les risques d'ondulations de ces fibres.

Les fibres orientées à A° forment avec les fibres orientées à -A° des losanges élémentaires 42 tous identiques lorsque la préforme est rectiligne comme illustré sur la figure 5. Après déformation, les losanges élémentaires sont toujours symétriques par rapport à une direction radiale 44. Lors de la déformation, les points d'intersections des fibres A° et -A° agissent comme des noeuds au niveau desquels pivotent les fibres. Ainsi, les nappes avec des fibres orientées à A° et celles avec des fibres orientées à -A° se déforment sans plissement.

Selon un mode de réalisation préféré et illustré sur la figure 6, tous les losanges élémentaires se déforment de manière symétrique par rapport à des directions radiales 44. La fibre neutre 40 étant disposée entre la dernière nappe de fibres orientées à 0° et l'axe de rotation X, tous les losanges élémentaires 42 s'étirent selon une direction perpendiculaire à la direction radiale. Dans ce cas, toutes les fibres sont soumises à un effort de traction et aucun plissement n'est possible, même les couches avec des fibres orientées à 0° au niveau de l'aile intérieure 14. Comme illustré sur la figure 6, l'orientation des fibres orientées à A° et -A° dans la préforme rectiligne est modifiée après le cintrage.

Ainsi, l'angle formé par les fibres orientées initialement à A° diminue en fonction de l'éloignement de l'axe de rotation X alors que celui formé par les fibres orientées initialement à -A° augmente en fonction de l'éloignement de l'axe de rotation X.

Compte tenu de l'intervalle de tolérance +/-IT fixé par le bureau d'étude de l'ordre de +/- 3°, les fibres censées être orientées à A° seront positionnées à A+IT° avant le cintrage et les fibres censées être orientées à -A° seront positionnées à -(A+IT)° avant le cintrage. Selon cet agencement après la phase de cintrage, toutes les fibres sont orientées correctement et forment un angle de +A +/-IT ou de -A +/-IT. Cet agencement permet d'augmenter significativement la hauteur de l'âme. A titre d'exemple, la hauteur de l'âme était limitée à approximativement 80 mm pour l'art antérieur alors qu'elle peut atteindre approximativement 170 mm pour l'invention.

Lorsque A = 30° et que l'intervalle de tolérance est de +/- 3°, avant déformation, les fibres de certaines nappes sont orientées à +33° alors que les fibres d'autres nappes sont orientées à -33°. Dans ce cas, après cintrage, toutes les fibres sont correctement orientées et respectent l'intervalle de tolérance. Ainsi, pour certaines nappes, les fibres proches de l'aile intérieure 14 sont orientées à 33° et les fibres proches de l'aile extérieure 16 sont orientées à 27° et respectent toutes l'orientation de 30° +/-3°.

Après la phase de cintrage, les nappes cintrées sont polymérisées. Selon un mode de réalisation, on peut retirer le mandrin déformable et appliquer une vessie audessus de la préforme cintrée pour exercer une pression sur les nappes lors du cycle de température. En variante, la vessie peut être rapportée au-dessus du mandrin lors de la phase de polymérisation, le mandrin assurant la fonction de plaque pour conformer la surface extérieure du profilé courbe.

Sur les figures 3, 7 à 10, on a représenté différents mandrins déformables 22. Selon un mode de réalisation, le mandrin déformable est réalisé en élastomère et comprend une extension 38 dans laquelle est inséré un renfort inextensible 46 matérialisant la fibre neutre 40, comme illustré sur la figure 3.

Dans certains cas, la capacité d'extension de l'élastomère n'est pas suffisante. Dans ce cas, le mandrin déformable 22 comprend une pluralité de tronçons disjoints 48 qui sont disposés les uns à la suite des autres selon la longueur du mandrin.

Avantageusement, tous les tronçons 48 ont la même section, notamment complémentaire au profilé à obtenir et ont tous la même longueur.

Ces tronçons 48 sont reliés entre eux par un élément de liaison 50 qui comprend une portion plus proche de l'axe de rotation X que la dernière nappe de fibres orientées à 0° empilée, la fibre neutre 40 étant disposée dans cette portion.

Selon ce mode de réalisation, la déformation du mandrin ne découle pas du matériau des tronçons mais du fait que les tronçons sont disjoints et peuvent s'écarter les uns des autres à la manière d'un éventail.

Selon un mode de réalisation, les tronçons sont réalisés en un matériau sensiblement rigide, plus rigide qu'un élastomère.

En complément, l'élément de liaison 50 se présente sous la forme d'une règle 52, pouvant être métallique. Cette règle 52 a une faible épaisseur selon la direction de l'axe de rotation X, de l'ordre de quelque millimètres et comprend au niveau d'un bord 54, le plus éloigné de l'axe de rotation X, des découpes 56 permettant à la règle 52 de pouvoir se déformer et se cintrer autour de l'axe de rotation X. Selon un mode de réalisation, la règle 52 comprend au niveau de son bord 54 une forme en créneau, avec une alternance de découpes (56) et de formes en saillie 58. Chaque tronçon 48 est relié grâce à une liaison 60 à la règle 52, ladite liaison 60 étant prévue au niveau d'une forme en saillie 58.

Selon une autre caractéristique de l'invention, le mandrin déformable 22 comprend des moyens 62 pour retenir les fibres orientées radialement, soit à 90°.

Dans un plan transversal contenant l'axe de rotation X, la préforme 20 comprend un bord Bi le plus proche de l'axe de rotation X et un bord Be le plus éloigné de l'axe de rotation X.

Avantageusement, les moyens 62 pour retenir les fibres orientées à 90° sont prévus en dehors de la préforme, au moins au niveau du bord Be. En retenant les fibres orientées à 90° au moins au niveau du bord Be, on limite les risques d'ondulation des fibres orientées à 90° qui ont tendance à glisser vers l'axe de rotation X lors de la déformation des losanges élémentaires 42.

Selon une variante, les moyens 62 pour retenir les fibres orientées à 90° sont uniquement prévus au niveau du bord Be.

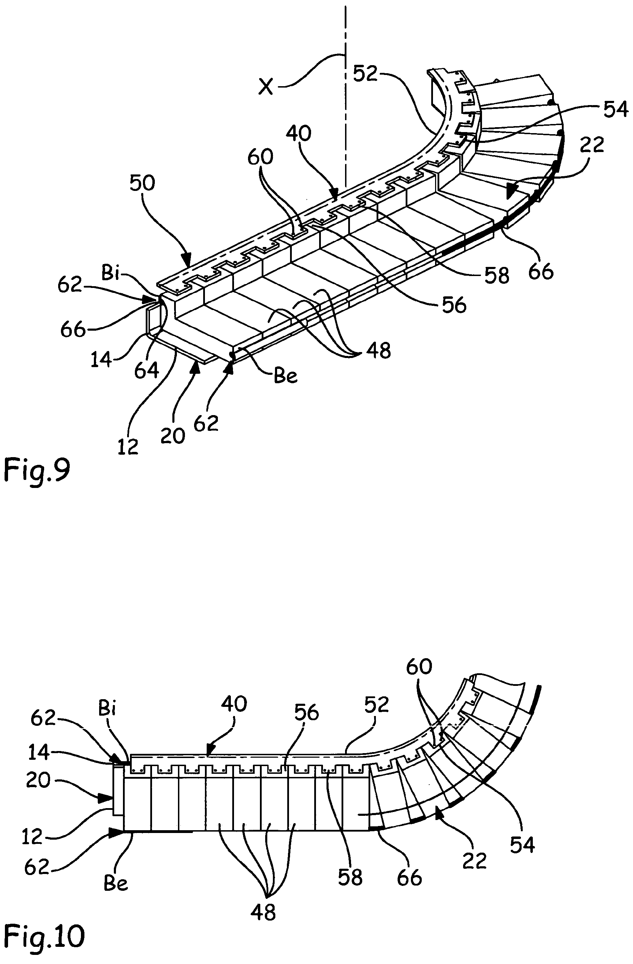

Selon une autre variante illustrée sur la figure 9, les moyens 62 pour retenir les fibres orientées à 90° sont prévus de part et d'autre de la préforme, au niveau du bord Bi et du bord Be.

Afin d'être retenue, les fibres orientées à 90° dépassent du bord Be et de préférence des deux bords Be et Bi.

Selon un mode de réalisation, les moyens 62 pour retenir comprennent au moins au niveau du bord Be, d'une part une rainure 64 au niveau du mandrin dans laquelle les fibres orientées à 90° peuvent s'y introduire, et d'autre part, un jonc 66 (par exemple en élastomère) qui s'insère dans la rainure 64 et maintient les fibres orientées à 90°.

Selon une autre caractéristique, le mandrin déformable 22 comprend des moyens pour brider la préforme 20 à chaque extrémité (selon sa longueur). A chaque extrémité, ce bridage peut être réalisé grâce à un mors, la préforme 20 étant pincée entre le mors et la préforme. Cet agencement permet de maintenir les sections de la préforme perpendiculaires à la fibre neutre et d'éviter qu'elles ne s'inclinent lors du cintrage.

Pour obtenir un cadre avec une section en Z, un premier mode opératoire consiste à former une préforme rectiligne en Z en utilisant un mandrin déformable avec une section complémentaire comme illustré sur la figure 3, puis à la cintrer.

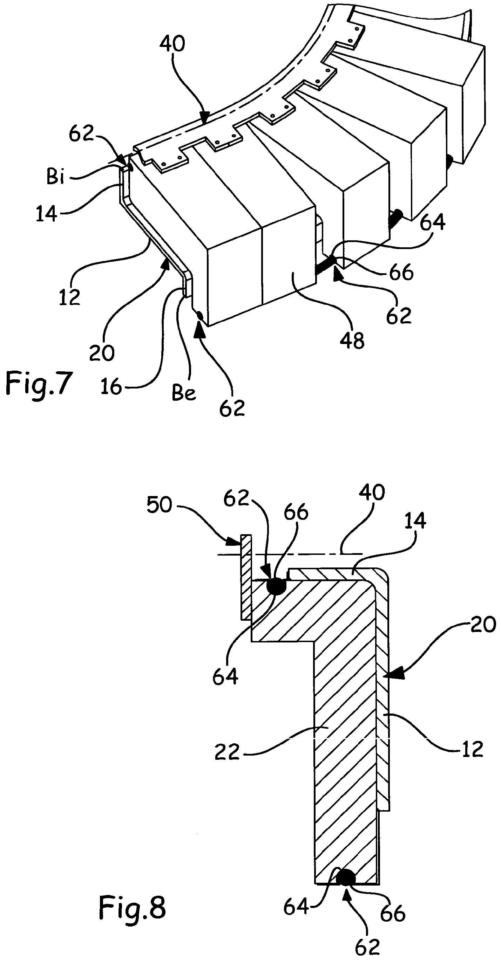

Selon un autre mode opératoire, un cadre avec une section en Z est obtenu en formant une préforme rectiligne en L en utilisant un mandrin comme illustré sur les figures 8, 9 et 10.

Selon ce mode opératoire, on réalise dans un premier temps une préforme rectiligne avec une section en L. En suivant, cette préforme rectiligne en L est cintrée. Hormis la forme de la section, ces deux étapes sont réalisées de la même manière que pour la préforme en Z.

Après cintrage, le mandrin est retiré puis l'extrémité du L est rabattue de manière à former l'aile extérieure. Cette opération peut être réalisée par thermoformage sous vessie. Ce mode opératoire permet d'éviter que la striction de l'âme de la section en Z ne se répercute sur l'aile extérieure lors du cintrage. Le procédé de l'invention procure les avantages suivants :
En premier lieu, le procédé permet de réduire fortement les coûts et le temps de réalisation dans la mesure où toutes les nappes sont cintrées en une seule phase et non pas selon un procédé pas à pas.
En second lieu, le procédé de l'invention permet de limiter les rebuts en raison de l'absence de plissement ou de pontage au niveau des rayons de courbure.

Selon un autre avantage, il est possible de réaliser des profilés avec des âmes de plus grandes dimensions.

Selon un autre avantage, le fait que le mandrin 22 comprenne une fibre neutre 40 disposée dans une extension 38 afin qu'elle soit disposée entre la dernière nappe de fibres orientées à 0° et l'axe de rotation X permet de ne pas induire d'efforts de compression au niveau des fibres orientées à 0° dans l'aile intérieure qui par conséquent n'ondulent pas.

Selon un autre avantage, le procédé de l'invention permet de maîtriser la position des fibres de renforts orientées à 90°.

Selon un avantage de l'invention, la vitesse de cintrage est nettement supérieure à celle de l'art antérieur, de l'ordre de 8 mm/s, car la préforme est préchauffée en amont de l'outillage de cintrage.

Enfin, le procédé assure une meilleure maîtrise du vieillissement de la résine dans la mesure où seule la portion déformée subit une élévation de température.

## Revendications

1. Procédé de réalisation d'un profilé courbe à partir d'une préforme rectiligne de nappes de fibres pré-imprégnées, ledit procédé consistant à empiler des nappes sur un mandrin déformable (22) et à enrouler ledit mandrin déformable (22) et les nappes empilées sur un outillage de cintrage (32) selon un axe de rotation (X), ledit profilé (10) comprenant un empilage de N nappes, au moins une première partie (12) du profilé étant disposée dans un plan perpendiculaire à l'axe de rotation (X) et au moins une deuxième partie (14, 16) parallèle à l'axe (X) comprenant au moins une nappe de fibres orientées à 0° selon la longueur de la préforme, **caractérisé en ce qu'**il consiste à empiler les N nappes de fibres sur le mandrin déformable (22), ledit mandrin déformable (22) comprenant une fibre neutre (40) disposée au niveau d'une extension du mandrin déformable (22) dont une portion est plus proche de l'axe de rotation (X) que la dernière nappe de fibres orientées à 0° empilée au niveau de la deuxième partie (14) parallèle à l'axe de rotation (X), à cintrer en une seule phase les N nappes intercalées entre le mandrin déformable (22) et l'outillage de cintrage (32) et à polymériser lesdites N nappes cintrées.

2. Procédé selon la revendication 1, **caractérisé en ce qu'**il consiste à utiliser un mandrin déformable (22) comprenant une pluralité de tronçons disjoints (48) qui sont disposés les uns à la suite des autres selon la longueur du mandrin et qui sont reliés entre eux par un élément de liaison (50) avec une fibre neutre (40) disposée entre l'axe de rotation (X) et la dernière nappe de fibres orientées à 0° empilée.

3. Procédé selon la revendication 1 ou 2, **caractérisé en ce qu'**il consiste à retenir les fibres orientées radialement au moins au niveau d'un bord (Be) de la préforme le plus éloigné de l'axe de rotation (X).

4. Procédé de réalisation d'un profilé courbe avec une section en Z selon l'une quelconque des revendications précédentes, **caractérisé en ce qu'**il consiste à réaliser une préforme rectiligne avec une section en L, à cintrer cette préforme rectiligne avec une section en L, à rabattre l'extrémité de la section en L de manière à former une aile extérieure puis à polymériser la préforme cintrée avec une section en Z.

5. Mandrin déformable pour la mise en oeuvre du procédé selon l'une quelconque des revendications précédentes, le mandrin permettant la dépose de nappes de fibres de manière à obtenir une préforme rectiligne et le cintrage de ladite préforme selon un axe de rotation (X), ladite préforme comprenant au moins une première partie (12) disposée dans un plan perpendiculaire à l'axe de rotation (X) et au moins une deuxième partie (14, 16) parallèle à l'axe (X) avec au moins une nappe de fibres orientées à 0° selon la longueur de la préforme, ledit mandrin déformable étant **caractérisé en ce qu'**il comprend une extension dont une portion est plus proche de l'axe de rotation (X) que la dernière nappe de fibres orientées à 0° empilée lorsque la préforme est disposée sur le mandrin et une fibre neutre (40) disposée au niveau de ladite portion.

6. Mandrin déformable selon la revendication 5, **caractérisé en ce qu'**il comprend une pluralité de tronçons disjoints (48) qui sont disposés les uns à la suite des autres selon la longueur du mandrin et qui sont reliés entre eux par un élément de liaison (50) avec une fibre neutre disposée entre l'axe de rotation (X) et la dernière nappe de fibres orientées à 0° empilée lorsque la préforme est disposée sur le mandrin.

7. Mandrin déformable selon la revendication 6, **caractérisé en ce que** l'élément de liaison (50) se présente sous la forme d'une règle (52) avec au niveau d'un bord (54), le plus éloigné de l'axe de rotation (X), une alternance de découpes (56) et de formes en saillie (58) permettant à la règle (52) de pouvoir se déformer et se cintrer autour de l'axe de rotation (X), chaque tronçon (48) étant relié grâce à une liaison (60) à la règle (52) prévue au niveau d'une forme en saillie (58).

8. Mandrin déformable selon l'une quelconque des revendications 5 à 7, **caractérisé en ce qu'**il comprend des moyens (62) pour retenir des fibres orientées radialement de la préforme disposée sur le mandrin au moins au niveau d'un bord (Be) de la préforme le plus éloigné de l'axe de rotation (X).

9. Mandrin déformable selon la revendication 8, **caractérisé en ce qu'**il comprend des moyens (62) pour retenir des fibres orientées radialement de la préforme disposée sur le mandrin de part et d'autre de la préforme.

10. Mandrin déformable selon l'une quelconque des revendications 8 ou 9, **caractérisé en ce que** les moyens (62) pour retenir les fibres comprennent au moins au niveau du bord (Be) de la préforme disposée sur le mandrin le plus éloigné de l'axe de rotation (X), d'une part une rainure (64) dans laquelle les fibres orientées radialement peuvent s'y introduire, et d'autre part, un jonc 66 qui s'insère dans la rainure (64) et maintient les fibres.

11. Mandrin déformable selon l'une quelconque des revendications 5 à 10, **caractérisé en ce qu'**il comprend des moyens pour brider la préforme disposée sur le mandrin à chaque extrémité.

## Patentansprüche

1. Verfahren zur Herstellung eines gekrümmten Profils auf der Basis einer geraden Vorform mit Lagen von vorimprägnierten Fasern, wobei das Verfahren darin besteht, die Lagen auf einer verformbaren Aufnahme (22) zu stapeln und die verformbare Aufnahme (22) und die gestapelten Lagen auf ein Biegewerkzeug (32) um eine Drehachse (X) aufzurollen, wobei das Profil (10) einen Stapel von N Lagen aufweist und wobei wenigstens ein erster Teil (12) des Profils in einer zur Drehachse (X) rechtwinkligen Ebene angeordnet ist und wobei wenigstens ein zur Achse (X) paralleler zweiter Teil (14, 16) wenigstens eine Lage von Fasern aufweist, die in einem Winkel von 0° in Bezug auf die Länge der Vorform angeordnet sind, **dadurch gekennzeichnet, dass** dieses darin besteht, die N Lagen von Fasern auf der verformbaren Aufnahme (22) zu stapeln, wobei die verformbare Aufnahme (22) eine neutrale Faser (40) aufweist, die im Bereich einer Erweiterung der verformbaren Aufnahme (22) angeordnet ist, von der ein Teil näher an der Drehachse (X) liegt als die im Bereich des zur Drehachse (X) parallelen zweiten Teils (14) aufgestapelte letzte Lage von auf 0° ausgerichteten Fasern, und die N Lagen, die zwischen der verformbaren Aufnahme (22) und dem Biegewerkzeug (32) angeordnet sind, in einem einzigen Arbeitsgang zu biegen und die gebogenen N Lagen zu polymerisieren.

2. Verfahren nach Anspruch 1, **dadurch gekennzeichnet, dass** dieses darin besteht, eine verformbare Aufnahme (22) zu verwenden, die eine Vielzahl von getrennten Teilstücken (48) aufweist, die der Länge der Aufnahme nach aufeinanderfolgend angeordnet sind und die untereinander durch ein Verbindungselement (50) mit einer neutralen Faser (40) verbunden sind, die zwischen der Drehachse (X) und der letzten gestapelten Lage von auf 0° ausgerichteten Fasern angeordnet ist.

3. Verfahren nach Anspruch 1 oder 2, **dadurch gekennzeichnet, dass** dieses darin besteht, die radial ausgerichteten Fasern wenigstens im Bereich eines Randes (Be) der Vorform, der am weitesten von der Drehachse (X) entfernt ist, zu halten.

4. Verfahren zur Herstellung eines gekrümmten Profils mit einem Z-förmigen Querschnitt nach einem der vorhergehenden Ansprüche, **dadurch gekennzeichnet, dass** dieses darin besteht, eine gerade Vorform mit einem L-förmigen Querschnitt herzustellen, diese gerade Vorform mit L-förmigem Querschnitt zu biegen, ein Ende des L-förmigen Querschnitts umzubiegen, um einen äußeren Flügel zu bilden, und dann die gebogene Vorform mit Z-förmigem Querschnitt zu polymerisieren.

5. Verformbare Aufnahme für die Durchführung eines Verfahrens nach einem der vorhergehenden Ansprüche, wobei die Aufnahme die Ablage von Lagen von Fasern gestattet, um eine gerade Vorform zu erzeugen, und das Biegen der Vorform um eine Drehachse (X) gestattet, wobei die Vorform wenigstens einen ersten Teil (12) aufweist, der in einer zur Drehachse (X) rechtwinkligen Ebene angeordnet ist, und wenigstens einen zur Achse (X) parallelen zweiten Teil (14, 16) mit wenigstens einer Lage von Fasern, die bezüglich der Länge der Vorform auf 0° ausgerichtet sind, wobei die verformbare Aufnahme **dadurch gekennzeichnet ist, dass** diese eine Erweiterung aufweist, von der ein Abschnitt der Drehachse (X) näher liegt als die letzte gestapelte Lage von auf 0° ausgerichteten Fasern, wenn die Vorform auf der Aufnahme angeordnet ist und eine neutrale Faser (40) im Bereich des Abschnitts angeordnet ist.

6. Verformbare Aufnahme nach Anspruch 5, **dadurch gekennzeichnet, dass** diese eine Vielzahl von getrennten Teilstücken (48) aufweist, die der Länge der Aufnahme nach aufeinander folgend angeordnet sind und die untereinander durch ein Verbindungselement (50) mit einer neutralen Faser verbunden sind, die zwischen der Drehachse (X) und der letzten gestapelten Lage von auf 0° ausgerichteten Fasern angeordnet ist, wenn sich die Vorform auf der Aufnahme befindet.

7. Verformbare Aufnahme nach Anspruch 6, **dadurch gekennzeichnet, dass** das Verbindungselement (50) als Band (52) ausgestaltet ist, mit einer wechselnden Abfolge von Einschnitten (56) und Vorsprüngen (58) im Bereich eines Randes (54), der am weitesten entfernt von der Drehachse (X) ist, die es dem Band (52) gestattet, sich verformen zu lassen und sich um die Drehachse (X) verbiegen zu lassen, wobei jedes Teilstück (48) aufgrund einer Verbindung (60), die im Bereich eines Vorsprungs (58) vorgesehen ist, mit dem Band (52) verbunden ist.

8. Verformbare Aufnahme nach einem der Ansprüche 5 bis 7, **dadurch gekennzeichnet, dass** diese Mittel (62) aufweist, um die radial ausgerichteten Fasern der auf der Aufnahme angeordneten Vorform wenigstens im Bereich eines Randes (Be) der Vorform zu halten, der am weitesten entfernt von der Drehachse (X) ist.

9. Verformbare Aufnahme nach Anspruch 8, **dadurch gekennzeichnet, dass** diese Mittel (62) aufweist, um die radial ausgerichteten Fasern der auf der Aufnahme angeordneten Vorform beidseits der Vorform zu halten.

10. Verformbare Aufnahme nach einem der Ansprüche 8 oder 9, **dadurch gekennzeichnet, dass** die Mittel (62) zum Halten der Fasern wenigstens im Bereich eines Randes (Be) der auf der Aufnahme angeordneten Vorform, der am weitesten von der Drehachse (X) entfernt ist einerseits eine Nut (64) aufweisen, in der die radial ausgerichteten Fasern eingeführt werden können, und andererseits einen Stab (66) aufweist, der in die Nut (64) einführbar ist und die Fasern hält.

11. Verformbare Aufnahme nach einem der Ansprüche 5 bis 10, **dadurch gekennzeichnet, dass** diese Mittel aufweist, um die auf der Aufnahme angeordnete Vorform an jedem Ende zu halten.

## Claims

1. Method for producing a curved section piece from a rectilinear preform of preimpregnated fibre layers, the said method consisting in stacking layers on a deformable mandrel (22) and in winding the said deformable mandrel (22) and the stacked layers on a bending tool (32) on a rotation axis (X), the said section piece (10) comprising a stack of N layers, at least a first portion (12) of the section piece being placed in a plane perpendicular to the rotation axis (X) and at least one second portion (14, 16) parallel to the axis (X) comprising at least one layer of fibres oriented at 0° along the length of the preform, **characterized in that** it consists in stacking the N fibre layers on the deformable mandrel (22), the said deformable mandrel (22) comprising a neutral fibre (40) placed on a portion of the deformable mandrel (22) closer to the rotation axis (X) than the last layer of fibres oriented at 0° stacked on the second portion (14) parallel to the rotation axis (X), in bending in a single phase the N layers inserted between the deformable mandrel (22) and the bending tool (32) and in polymerizing the said N bent layers.

2. Method according to Claim 1, **characterized in that** it consists in using a deformable mandrel (22) comprising a plurality of disconnected sections (48) which are placed one after the other along the length of the mandrel and which are connected together by a connecting element (50) with a neutral fibre (40) placed between the rotation axis (X) and the last layer of fibres oriented at 0° stacked.

3. Method according to Claim 1 or 2, **characterized in that** it consists in holding the radially oriented fibres at least on one edge (Be) of the preform furthest from the rotation axis (X).

4. Method of producing a curved section piece with a Z section according to any one of the preceding claims, **characterized in that** it consists in producing a rectilinear preform with an L section, in bending this rectilinear preform with an L section, in folding the end of the L section so as to form an outer flange, then in polymerizing the bent preform with a Z section.

5. Deformable mandrel for applying the method according to any one of the preceding claims, the mandrel making it possible to place fibre layers so as to obtain a rectilinear preform and to bend the said preform on a rotation axis (X), the said preform comprising at least one first portion (12) placed in a plane perpendicular to the rotation axis (X) and at least one second portion (14, 16) parallel to the axis (X) with at least one layer of fibres oriented at 0° along the length of the preform, the said deformable mandrel being **characterized in that** it comprises a portion closer to the rotation axis (X) than the last layer of fibres oriented at 0° stacked when the preform is placed on the mandrel and a neutral fibre (40) placed on the said portion.

6. Deformable mandrel according to Claim 5, **characterized in that** it comprises a plurality of disconnected sections (48) which are placed one after the other along the length of the mandrel and which are connected together by a connecting element (50) with a neutral fibre placed between the rotation axis (X) and the last layer of fibres oriented at 0° stacked when the preform is placed on the mandrel.

7. Deformable mandrel according to Claim 6, **characterized in that** the connecting element (50) takes the form of a rule (52) with, on one edge (54) furthest from the rotation axis (X), an alternation of cut-outs (56) and protruding shapes (58) allowing the rule (52) to be able to deform and to bend around the rotation axis (X), each section (48) being connected by virtue of a connection (60) to the rule (52) provided on a protruding shape (58).

8. Deformable mandrel according to any one of Claims 5 to 7, **characterized in that** it comprises means (62) for holding radially oriented fibres of the preform placed on the mandrel at least at one edge (Be) of the preform furthest from the rotation axis (X).

9. Deformable mandrel according to Claim 8, **characterized in that** it comprises means (62) for holding radially oriented fibres of the preform placed on the mandrel on either side of the preform.

10. Deformable mandrel according to Claim 8 or 9, **characterized in that** the means (62) for holding the fibres comprise at least on the edge (Be) of the preform placed on the mandrel furthest from the rotation axis (X), on the one hand a groove (64) in which the radially oriented fibres can be inserted, and, on the other hand, a retaining ring (66) which is inserted into the groove (64) and holds the fibres.

11. Deformable mandrel according to any one of Claims 5 to 10, **characterized in that** it comprises means for clamping the preform placed on the mandrel at each end.
